# EUROPEAN PATENT APPLICATION

(11) **EP 4 219 213 A1**
(43) Date of publication of application: **02.08.2023**
(21) Application number: 22207180.5
(22) Date of filing: 14.11.2022
(51) Int. Cl.: B60L 3/00, B60W 30/00

(54) **VEHICLE AND VEHICLE CONTROL METHOD**

(30) Priority: 26.01.2022 JP 2022009980
(71) Applicant: TOYOTA JIDOSHA KABUSHIKI KAISHA, Aichi-Ken 471-8571 (JP)
(72) Inventor: SANADA, Takeru, Toyota-shi, 471-8571 (JP); AKIBA, Shinya, Toyota-shi, 471-8571 (JP)
(74) Representative: J A Kemp LLP

(57) **Abstract**

A vehicle (1) includes a regenerative braking device (24) provided on regenerative braking wheels, which are any ones of front wheels (2f) and rear wheels (2r), a frictional braking device (26) configured to separately control a frictional braking force (FFB) applied to each of the front wheels (2f) and the rear wheels (2r), and an electronic control unit (40) configured to, upon detecting a slip state where a wheel speed (Vw) of the regenerative braking wheels executing regenerative braking is below a slip determination threshold value (THs) positioned between a vehicle body speed (V) and an anti-lock brake control operation threshold value, execute a regenerative control process for controlling the regenerative braking device (24) such that the regenerative braking device (24) generates a regenerative braking force (FRB) that decreases a difference between the wheel speed (Vw) and the slip determination threshold value (THs).

## Description

### BACKGROUND OF THE INVENTION

### 1. Field of the Invention

The present disclosure relates to a vehicle and a vehicle control method.

### 2. Description of Related Art

Japanese Unexamined Patent Application Publication No. 2013-043495 discloses a vehicle including a regenerative braking device and a hydraulic braking device (a frictional braking device). In the vehicle, at a time of regenerative braking, when a slip rate of wheels to which the regenerative braking is applied becomes equal to or higher than a first predetermined value, for all wheels to which the regenerative braking is applied, a hydraulic braking force (a frictional braking force) is increased by the hydraulic braking device while a regenerative braking force is decreased. Then, after the increase in the hydraulic braking force, an anti-lock braking operation is executed by the hydraulic braking device on wheels of which the slip rate has become equal to or higher than a first predetermined value.

### SUMMARY OF THE INVENTION

In order to increase a power recovery amount in a vehicle in which a regenerative braking device is provided on regenerative braking wheels, which are any ones of front wheels and rear wheels, it is required to increase the regenerative braking force applied to regenerative braking wheels as much as possible. Then, for example, it is conceivable to employ a configuration where, for example, a required vehicle braking force is satisfied using only the regenerative braking force applied to the regenerative braking wheels. However, in such a configuration, the regenerative braking wheels are locked at a lower vehicle deceleration than that in an example where the required vehicle braking force is satisfied using the braking force applied to both the regenerative braking wheels and the non-regenerative braking wheels. As a result, an early operation of an anti-lock braking control using the frictional braking device easily occurs. When the anti-lock braking control is operated, use of the regenerative braking force is hindered.

The present disclosure provides a vehicle and a vehicle control method that facilitate use of a large magnitude of a regenerative braking force while restricting an early operation of an anti-lock brake control.

A vehicle according to a first aspect of the present disclosure includes a regenerative braking device, a frictional braking device, and an electronic control unit. The regenerative braking device is provided on regenerative braking wheels of the vehicle, which are any ones of front wheels and rear wheels of the vehicle. The frictional braking device is configured to separately control a frictional braking force applied to each of the front wheels and the rear wheels. The electronic control device is configured to, upon detecting a slip state where a wheel speed of the regenerative braking wheels executing regenerative braking is below a slip determination threshold value positioned between a vehicle body speed of the vehicle and an anti-lock brake control operation threshold value, execute a regenerative control process for controlling the regenerative braking device such that the regenerative braking device generates a regenerative braking force that decreases the difference between the wheel speed of the regenerative braking wheels and the slip determination threshold value.

In the above first aspect, the electronic control unit may execute a first supplementary process for generating the frictional braking force of non-regenerative braking wheels, which are the other ones of the front wheels and the rear wheels, such that a required vehicle braking force is satisfied during the execution of the regenerative control process.

In the first aspect, the electronic control unit may execute, when the required vehicle braking force is increased during braking in which the regenerative control process is executed, a replacing process for replacing the regenerative braking force controlled by the regenerative control process with the frictional braking force of the regenerative braking wheels after the frictional braking force of the non-regenerative braking wheels controlled by the first supplementary process reaches a specific threshold value.

In the first aspect, the electronic control unit may increase, in the replacing process, the frictional braking force of the regenerative braking wheels while continuing the regenerative control process.

In the first aspect, the frictional braking device may include a front wheel cylinder and a rear wheel cylinder. The specific threshold value may be equivalent to a value of the frictional braking force of the non-regenerative braking wheels obtained when the frictional braking force of the non-regenerative braking wheels that is increased by the first supplementary process reaches an actual braking force distribution line that is obtained when brake fluids having the same hydraulic pressure are supplied to the front wheel cylinder and the rear wheel cylinder.

In the first aspect, the electronic control unit may execute a second supplementary process for increasing the frictional braking force of the non-regenerative braking wheels such that the required vehicle braking force is satisfied during the execution of the replacing process.

A second aspect of the present disclosure is a vehicle control method of controlling a vehicle including a regenerative braking device and a frictional braking device. The regenerative braking device is provided on regenerative braking wheels, which are any ones of front wheels and rear wheels of the vehicle. The frictional braking device is configured to separately control a frictional braking force applied to each of the front wheels and the rear wheels. The vehicle control method includes executing, upon detecting a slip state where a wheel speed of the regenerative braking wheels executing regenerative braking is below a slip determination threshold value positioned between a vehicle body speed of the vehicle and an anti-lock brake control operation threshold value, a regenerative control process for controlling the regenerative braking device such that the regenerative braking device generates a regenerative braking force that decreases a difference between the wheel speed of the regenerative braking wheels and the slip determination threshold value.

With each aspect of the present disclosure, it is possible to facilitate use of a large magnitude of a regenerative braking force while restricting an early operation of an anti-lock brake control.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically illustrating an example of a configuration of a vehicle according to an embodiment;
FIG. 2 is a diagram for describing a shortcoming that arises when increasing a regenerative braking force to increase a power recovery amount;
FIG. 3 is a time chart for describing an overview of a regenerative control process according to the embodiment;
FIG. 4 is a graph for describing a first supplementary process according to the embodiment;
FIG. 5 is a flowchart describing processes for a vehicle braking control according to the embodiment;
FIG. 6 is a time chart showing an operation at a time of braking in which a slip state is detected;
FIG. 7 is a graph for describing a shortcoming of the first supplementary process when a required braking force is increased during the braking;
FIG. 8 is a graph for describing an overview of a replacing process and processes regarding the replacing process according to the embodiment;
FIG. 9 is a flowchart describing processes for the vehicle braking control that accompany the replacing process according to the embodiment;
FIG. 10 is a time chart for describing an operation regarding the vehicle braking control that accompanies the replacing process according to the embodiment; and
FIG. 11A is a graph for describing the operations regarding the vehicle braking control that accompanies the replacing process according to the embodiment.
FIG. 11B is a graph for describing the operations regarding the vehicle braking control that accompanies the replacing process according to the embodiment.
FIG. 11C is a graph for describing the operations regarding the vehicle braking control that accompanies the replacing process according to the embodiment.
FIG. 11D is a graph for describing the operations regarding the vehicle braking control that accompanies the replacing process according to the embodiment.
FIG. 11E is a graph for describing the operations regarding the vehicle braking control that accompanies the replacing process according to the embodiment.
FIG. 11F is a graph for describing the operations regarding the vehicle braking control that accompanies the replacing process according to the embodiment.

### DETAILED DESCRIPTION OF EMBODIMENTS

Hereinafter, embodiments of the present disclosure will be described with reference to the accompanying drawings. However, components common to each drawing are denoted by the same reference signs, and overlapping descriptions are omitted or simplified. However, when numbers, such as a quantity, amount, range, and the like, of each component are referred to in the embodiments described below, technical ideas according to the present disclosure are not limited to the described numbers unless they are explicitly stated or the number is clearly specified in principle.

### Example of Vehicle Configuration

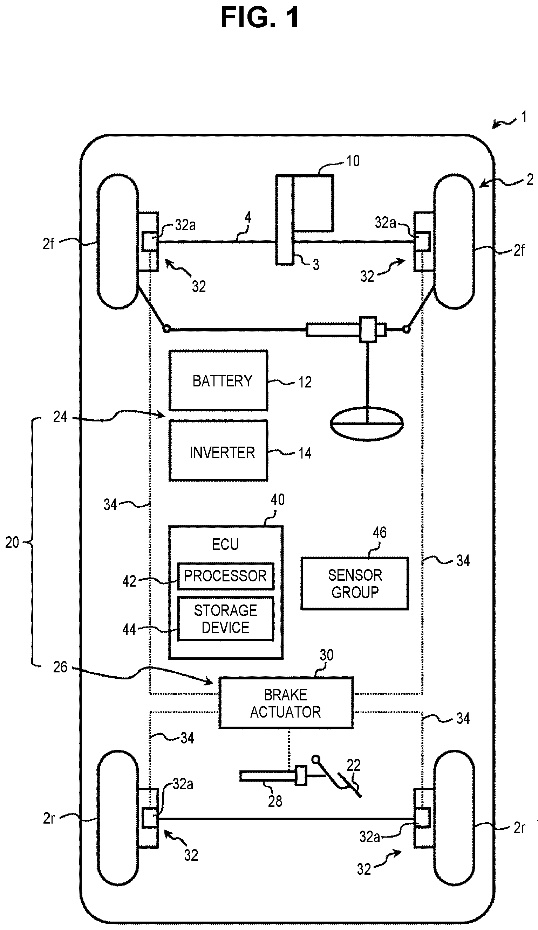

FIG. 1 is a diagram schematically illustrating an example of a configuration of a vehicle 1 according to an embodiment. The vehicle 1 includes four wheels 2. In the following description, right and left front wheels may be collectively referred to as 2f, and right and left rear wheels may be collectively referred to as 2r.

The vehicle 1 includes an electric motor 10. The electric motor 10 is mounted so as to drive the front wheels 2f via, for example, a deceleration gear 3 including a differential gear and a drive shaft 4 extending to the right and the left thereof. The electric motor 10 is operated with power supplied from a battery 12 to drive the vehicle 1. In other words, the vehicle 1 may be, for example, a front-wheel-drive battery electric vehicle (BEV). In more detail, the vehicle 1 includes an inverter 14 used for driving the electric motor 10. The inverter 14 is controlled based on a command from an ECU 40 described below.

The vehicle 1 includes a braking device 20. The braking device 20 includes a brake pedal 22 , a regenerative braking device 24, and a frictional braking device (a hydraulic braking device) 26.

In an example of the vehicle 1 illustrated in FIG. 1, the regenerative braking device 24 is provided on the front wheels 2f, which are examples of "regenerative braking wheels". Therefore, in this example, the rear wheels 2r are equivalent to "non-regenerative braking wheels". In more detail, in this example, since no drive force is applied to the rear wheels 2r, the rear wheels 2r are equivalent to "non-driving wheels" or "electric wheels".

The regenerative braking device 24 includes the above-described electric motor 10, the inverter 14, and the battery 12. Specifically, under a control of the inverter 14, the electric motor 10 not only functions as an electric motor that generates vehicle drive torque, but also functions as a generator that generates regenerative torque (negative torque) by being driven by rotation of the wheels 2f at a time of vehicle deceleration. The magnitude of the regenerative torque is controlled by the inverter 14. Regenerative power generated by the electric motor 10 charges the battery 12. A regenerative braking force FRB corresponding to the regenerative torque of the electric motor 10 is applied to the front wheels 2f. As such, the regenerative braking device 24 can control the regenerative braking force FRB applied to the front wheels 2f.

The frictional braking device 26 is configured to be able to separately control frictional braking forces FFBf and FFBr applied to the front wheels 2f and the rear wheels 2r, respectively. Specifically, the frictional braking device 26 includes a master cylinder 28, a brake actuator 30, a brake mechanism 32, and a hydraulic pipe 34. The master cylinder 28 generates hydraulic pressure corresponding to a depression force of the brake pedal 22, and supplies the generated hydraulic pressure (brake hydraulic pressure) to the brake actuator 30.

The brake actuator 30 includes a hydraulic circuit (not shown) interposed between the master cylinder 28 and the brake mechanism 32. The hydraulic circuit includes a pump used for boosting the brake hydraulic pressure without relying on master cylinder pressure, a reservoir used for storing brake fluid, and a plurality of electromagnetic valves.

A brake mechanism 32 is connected to the brake actuator 30 via the hydraulic pipe 34. The brake mechanism 32 is arranged on each wheel 2. The brake actuator 30 distributes the brake hydraulic pressure to the brake mechanism 32 of each wheel 2. More specifically, the brake actuator 30 can supply the brake hydraulic pressure to the brake mechanism 32 of each wheel 2 using the master cylinder 28 or the pump as a pressure source. The brake mechanism 32 has a wheel cylinder 32a that operates according to the supplied brake hydraulic pressure. By operating the wheel cylinder 32a by the brake hydraulic pressure, a brake pad is pressed against a brake disc. As a result, the frictional braking force FFB is applied to the wheels 2.

Further, the brake actuator 30 can independently adjust the brake hydraulic pressure applied to each wheel 2 by controlling various electromagnetic valves included in the hydraulic circuit. More specifically, the brake actuator 30 has, as brake hydraulic pressure control modes, a pressure increase mode for increasing pressure, a retaining mode for retaining pressure, and a pressure decrease mode for decreasing pressure. By controlling ON/OFF of the various electromagnetic valves, the brake actuator 30 can vary the brake hydraulic pressure control mode for each wheel 2. The frictional braking forces FFB applied to the respective wheels 2 are determined according to the brake hydraulic pressure supplied to respective wheel cylinders 32a. By changing control modes as above, the brake actuator 30 can independently control the frictional braking force FFB of each wheel 2.

Further, as illustrated in FIG. 1, the vehicle 1 includes an electronic control unit (ECU) 40. The ECU 40 includes a processor 42, a storage device 44, and an input/output interface. The input/output interface receives sensor signals from a sensor group 46 attached to the vehicle 1 and outputs operation signals to various actuators, such as the electric motor 10 and the brake actuator 30, and the inverter 14. The storage device 44 stores various control programs for controlling the various actuators and the inverter 14. The processor 42 reads the control programs from the storage device 44 and executes them, thereby implementing processes for various controls using the various actuators and the inverter 14. The number of ECUs 40 may be plural.

The sensor group 46 includes, for example, a wheel speed sensor, a forward-backward acceleration sensor, and a brake position sensor. The wheel speed sensor is arranged corresponding to each wheel 2 and outputs a wheel speed signal corresponding to a rotation speed of the wheel 2. The forward-backward acceleration sensor outputs an acceleration signal corresponding to acceleration of the vehicle 1 in the front-rear direction. The brake position sensor outputs a signal corresponding to a depression amount of the brake pedal 22.

The "regenerative braking device" according to the present disclosure may be provided on the rear wheels 2r instead of the front wheels 2f. In other words, the "vehicle" according to the present disclosure may be, for example, a rear-wheel-drive BEV in which the rear wheels 2r are driven by the electric motor 10 included in the regenerative braking device 24. Further, the "vehicle" may be, for example, a hybrid electric vehicle (HEV) including an internal combustion engine together with the electric motor 10 as a drive source, instead of a BEV Additionally, in the example of the HEV, the "regenerative braking wheels", which are ones of the front wheels 2f or the rear wheels 2r, may be driven by the internal combustion engine together with the electric motor 10, or the "non-regenerative braking wheels", which are the other ones of the front wheels 2f or the rear wheels 2r, may be driven by the internal combustion engine. Further, the electric motor used for the regenerative braking may be, for example, an in-wheel motor, instead of the electric motor 10 that drives the wheels 2 via the drive shaft 4.

### Vehicle Braking Control

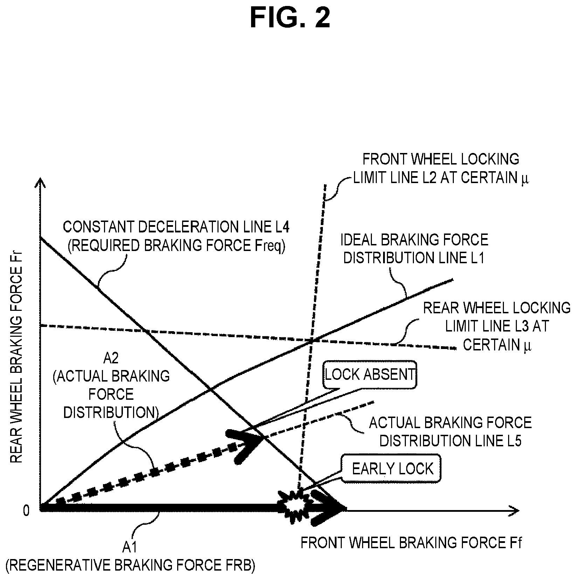

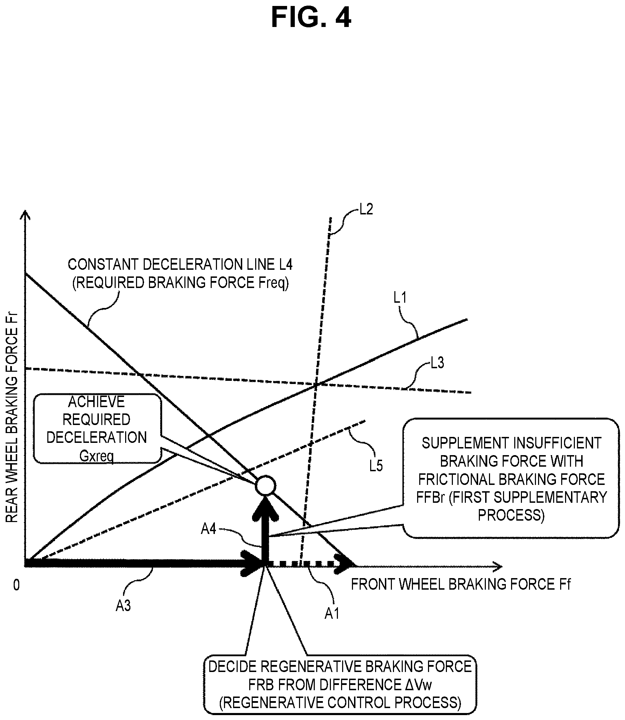

FIG. 2 is a diagram for describing a shortcoming that arises when increasing a regenerative braking force to increase a power recovery amount. FIG. 2 shows, as a target, a vehicle in which the front wheels 2f are the regenerative braking wheels, such as the vehicle 1 illustrated in FIG. 1. This is also the same in FIGS. 4, 7, 8, and 11A to 11F that are described below. Further, in the following description, the front wheels 2f equivalent to regenerative braking wheels are also referred to as "regenerative wheels 2f', and the rear wheels 2r equivalent to non-regenerative braking wheels are also referred to as "non-regenerative wheels 2r".

FIG. 2 shows an ideal braking force distribution line L1 of the front wheel braking force Ff and the rear wheel braking force Fr, and a front wheel locking limit line L2 and a rear wheel locking limit line L3 at a certain friction coefficient µ of a road surface. The ideal braking force distribution line L1 represents a braking force distribution characteristic that realizes a front/rear distribution ratio such that the front wheels 2f and the rear wheels 2r are simultaneously locked at a time of braking, and is obtained from specifications of the vehicle 1. Further, FIG. 2 shows a constant deceleration line L4 where a vehicle deceleration Gx is constant at a required vehicle deceleration (or simply a required deceleration) Gxreq based on a driver's operation of the brake pedal 22.

FIG. 2 shows, together with a solid arrow A1, an example where only the regenerative braking force FRB is applied as the vehicle braking force F to satisfy a required vehicle braking force (or simply a required braking force) Freq corresponding to the required deceleration Gxreq while increasing the power recovery amount. Further, FIG. 2 shows, together with a dashed arrow A2, a comparative example where the braking force is simultaneously applied to both the front wheels 2f and the rear wheels 2r to satisfy the required braking force Freq. The arrow A2 follows an actual braking force distribution line L5. The actual braking force distribution line L5 represents a braking force distribution characteristic where a constant front-rear distribution ratio is obtained regardless of the vehicle deceleration Gx. The actual braking force distribution line L5 is determined according to the frictional braking device 26 and specifications of the vehicle 1, and is obtained when brake fluids having the same hydraulic pressure are supplied to the wheel cylinders 32a for the front wheels (the regenerative wheels) 2f and the rear wheels (the non-regenerative wheels) 2r, respectively.

In the example of the time of the braking illustrated in FIG. 2, in a case where the required deceleration Gxreq corresponding to the constant deceleration line L4 is required, to satisfy the required braking force Freq using only the regenerative braking force FRB acting on the regenerative wheels 2f (the arrow A1), the front wheel braking force Ff exceeds the front wheel locking limit line L2. Additionally, even when the regenerative braking force FRB having a magnitude that does not exceed the limit line L2 is used under the friction coefficient µ of a normal paved road, as illustrated in FIG. 2, the front wheel braking force Ff may exceed the limit line L2 by, for example, a change (such as a decrease in the friction coefficient µ of the road surface) in a road surface state during the braking.

On the other hand, as represented by the arrow A2, in the comparative example using the actual braking force distribution, when the same required deceleration Gxreq is satisfied, none of the front wheel braking force Ff or the rear wheel braking force Fr exceeds the locking limit lines L2, L3. As such, to satisfy the required deceleration Gxreq using only the regenerative braking force FRB, the regenerative wheels 2f are locked at a lower vehicle deceleration Gx than that in the comparative example. As a result, an early operation of an anti-lock braking control (an ABS control) using the frictional braking device 26 easily occurs. When the ABS control is operated, use of the regenerative braking force FRB is hindered.

### Regenerative Control Process

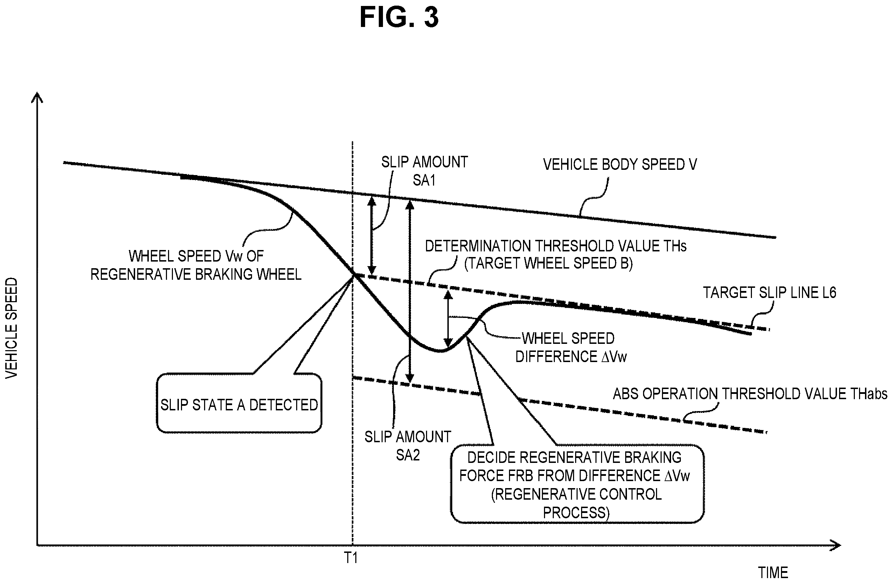

In consideration of the above-described shortcoming, in the present embodiment, when a large regenerative braking force FRB is used in order to increase the power recovery amount, the ECU 40 executes the following "regenerative control process". FIG. 3 is a time chart for describing an overview of the regenerative control process according to the embodiment.

Specifically, in the present embodiment, the regenerative control process is executed during the braking using only the regenerative braking force FRB as the vehicle braking force F to satisfy the required braking force Freq corresponding to the required deceleration Gxreq by the driver. FIG. 3 shows a state where, during the braking in which only the regenerative braking is executed as above, for example, caused by a change in the road surface state, a slip occurs in one of the regenerative wheels 2f, and a wheel speed Vw of the regenerative wheel 2f is becoming slower than a vehicle body speed V

Here, a condition for operating the ABS control is satisfied when a (actual) slip value S of a certain wheel 2 exceeds a predetermined determination value Sth. The slip value S referred to here is a slip amount SA (= V - Vw), which is a difference between the vehicle body speed V and the wheel speed Vw, or a slip rate SR (= (V - Vw) / V × 100). With the ABS control, in order to restrict locking of the wheel 2 in which the slip has occurred, the frictional braking force FFB of the wheel 2 is controlled by the frictional braking device 26 such that the slip value S is close to a target slip value. The vehicle body speed V can be calculated based on, for example, the wheel speed Vw of each wheel 2.

FIG. 3 shows a waveform of the vehicle body speed V, and a waveform of each of an operation threshold value of the ABS control (an ABS operation threshold value) THabs and a slip determination threshold value THs. The ABS operation threshold value THabs is equivalent to a value of the wheel speed Vw corresponding to the determination value Sth of the slip value S, which is used as the condition for operating the ABS control.

As represented as a target slip line L6 in FIG. 3, the slip determination threshold value THs used in the regenerative control process is a wheel speed value positioned between the vehicle body speed V and the ABS operation threshold value THabs. In other words, the slip determination threshold value THs is a value lower than the vehicle body speed V and higher than the ABS operation threshold value THabs. In more detail, in the example illustrated in FIG. 3, the slip determination threshold value THs is set as the wheel speed Vw lower than the vehicle body speed V by a predetermined slip amount SA1. Then, the slip amount SA1 is smaller than a slip amount SA2 of the ABS operation threshold value THabs with respect to the vehicle body speed V

Time T1 in FIG. 3 is equivalent to a time when the slip state A is detected. The slip state A is a state where the wheel speed Vw of one of the regenerative wheels 2f executing the regenerative braking is below the slip determination threshold value THs. In the regenerative control process, when the slip state A is detected, the ECU 40 sets the slip determination threshold value THs as a target wheel speed B of the regenerative wheel 2f. Additionally, the slip amount SA1 is equivalent to a target slip amount by the regenerative control process.

Here, a difference between the wheel speed Vw and the target wheel speed B is referred to as a wheel speed difference ΔVw. In the regenerative control process, the ECU 40 calculates the regenerative braking force FRB that decreases (the absolute value of) the wheel speed difference ΔVw of the regenerative wheel 2f in which the slip state A is occurring. In other words, based on the wheel speed difference ΔVw, the ECU 40 calculates the regenerative braking force FRB required to converge the wheel speed Vw of the regenerative wheel 2f to the target wheel speed B.

As described above, with the regenerative control process, the wheel speed difference ΔVw occurring in the regenerative wheel 2f executing the regenerative braking force is monitored. Then, the ECU 40 controls the regenerative braking device 24 such that the calculated regenerative braking force FRB is generated. As a result, as illustrated in FIG. 3, the wheel speed Vw of the regenerative wheel 2f is converged to the target wheel speed B after the slip state A is detected.

### First Supplementary Process

FIG. 4 is a graph for describing a first supplementary process according to the embodiment. FIG. 4 shows an operation at the time of the braking in which the required deceleration Gxreq and the friction coefficient µ of the road surface are under the same conditions as in FIG. 2. In the conditions illustrated in FIG. 4, when only the regenerative braking force FRB is used to satisfy the required deceleration Gxreq (the required braking force Freq) as represented by an arrow A1 (a dashed line in FIG. 4), a slip occurs in one or both of the regenerative wheels (the front wheels) 2f and the slip state A is detected. As a result, with the vehicle braking control of the present embodiment, in order to converge the generated slip, the regenerative braking force FRB is decreased, as represented by an arrow A3, by the above-described regenerative control process.

The first supplementary process is executed during the execution of the regenerative control process such that the frictional braking force FFBr of the non-regenerative wheel (the rear wheel in the vehicle 1) 2r is generated to satisfy the required braking force Freq. As a result, in the example illustrated in FIG. 4, as represented by an arrow A4, the frictional braking force FFBr of the non-regenerative wheel 2r for supplementing an insufficient vehicle braking force F is generated.

### Processes by ECU

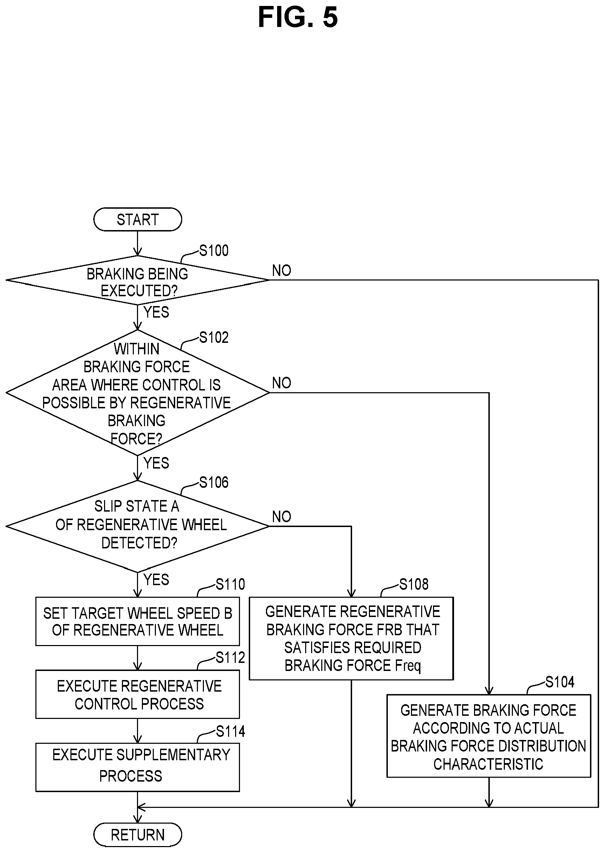

FIG. 5 is a flowchart describing processes for a vehicle braking control according to the embodiment. The processes of this flowchart are repeatedly executed while the vehicle 1 is traveling.

In FIG. 5, in step S100, the ECU 40 (the processor 42) determines whether the vehicle 1 is being braked. This determination can be made based on, for example, whether the depression amount of the brake pedal 22 detected by the brake position sensor is equal to or higher than a predetermined threshold value.

As a result, when the vehicle 1 is not being braked in step S100, the process proceeds to RETURN On the other hand, when the vehicle 1 is being braked, the process proceeds to step S102.

In step S102, the ECU 40 determines whether the required braking force Freq corresponding to the required deceleration Gxreq from the driver is within a braking force area in which the required braking force Freq can be controlled using only the regenerative braking force FRB. The required deceleration Gxreq can be calculated based on, for example, the depression amount of the brake pedal 22 or the master cylinder pressure. In the same manner, the required braking force Freq can also be calculated based on, for example, the depression amount of the brake pedal 22 or the master cylinder pressure.

Specifically, the determination of step S102 can be made based on, for example, whether the required braking force Freq is equal to or lower than an upper limit value FRBmax of the regenerative braking force. The upper limit value FRBmax referred to here is an upper limit value of the regenerative braking force that can be generated by the regenerative braking device 24 at present. For example, the upper limit value FRBmax is decided according to conditions, such as a state of charge (SOC) and a temperature of the battery 12, and the vehicle speed (the vehicle body speed V).

When the determination result of step S102 is No, for example, a process described in step S104 is executed. In other words, when the required braking force Freq is not within the braking force area in which the required braking force Freq can be controlled using only the regenerative braking force FRB, the ECU 40 controls the frictional braking device 26 such that the front wheel braking force Ff and the rear wheel braking force Fr that satisfy the required braking force Freq according to a fixed distribution characteristic (the actual braking force distribution line L5 illustrated in FIG. 4) are generated. Thereafter, the process proceeds to RETURN.

On the other hand, when the determination result of step S102 is Yes, the process proceeds to step S106. In step S106, the ECU 40 determines whether the regenerative wheel 2f is in the slip state A. This determination is executed based on whether the wheel speed Vw of one (or both) of the regenerative wheels 2f is below the slip determination threshold value THs (see FIG. 3).

In step S106, when the regenerative wheel 2f is not in the slip state A, the process proceeds to step S108. In step S108, the ECU 40 controls the regenerative braking device 24 such that the regenerative braking force FRB that satisfies the required braking force Freq calculated in step S102 is generated. Thereafter, the process proceeds to RETURN

On the other hand, in step S106, when the regenerative wheel 2f is in the slip state A, the process proceeds to step S110. Additionally, a determination as to whether the regenerative wheel 2f has been in the slip state A and then is released therefrom can be made based on, for example, whether the wheel speed Vw of the regenerative wheel 2f exceeds a slip recovery determination threshold value THs'. The slip recovery determination threshold value THs' is a wheel speed value equal to or lower than the vehicle body speed V, and higher than the slip determination threshold value THs by a predetermined amount.

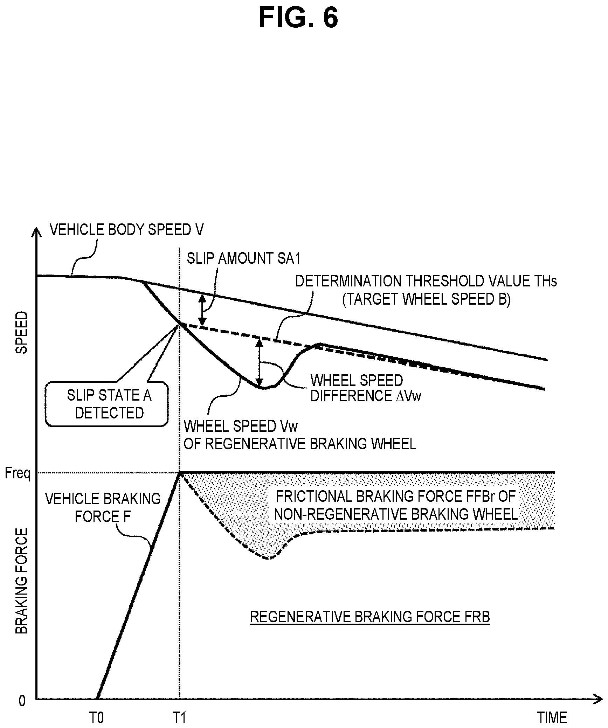

FIG. 6 is a time chart showing an operation at the time of the braking in which the slip state A is detected, and is supplementarily referred to for description of the processes of steps S110 to S114 below. In an example illustrated in FIG. 6, the regenerative braking force FRB is increased toward the required braking force Freq along with a start of the braking at time T0. Then, along with the increase, the slip occurs in the wheel speed Vw of one of the regenerative wheels 2f, and the slip state A is detected at time T1 thereafter.

In step S110, the ECU 40 sets (calculates) the target wheel speed B (the slip determination threshold value THs) of the regenerative wheel 2f. Specifically, the target wheel speed B at each time step after the detection of the slip state A can be calculated by, for example, subtracting a predetermined slip amount SA1 from the vehicle body speed V at each time step.

Next, in step S112, the ECU 40 executes the above-described regenerative control process. Specifically, the regenerative control process is executed as, for example, the following feedback control.

In other words, when the wheel speed Vw of the regenerative wheel 2f in which the slip state A is occurring is lower than the target wheel speed B (that is, when a slip larger than the target wheel speed B by the slip amount SA is occurring), the regenerative braking force FRB larger than a previous value of the regenerative braking force FRB by a predetermined increase amount C1 is calculated. On the other hand, when the wheel speed Vw of the regenerative wheel 2f is higher than the target wheel speed B (that is, when a slip smaller than the target wheel speed B by the slip amount SA is occurring), a regenerative braking force FRB smaller than a previous value by a predetermined decrease amount C2 is calculated. Further, each of the increase amount C1 and the decrease amount C2 of the regenerative braking force FRB may be set to be increased as (the absolute value of) the wheel speed difference ΔVw is increased. When the wheel speed Vw of the regenerative wheel 2f is equal to the target wheel speed B, the regenerative braking force FRB is maintained at the previous value.

The ECU 40 controls the regenerative braking device 24 such that the regenerative braking force FRB calculated in step S112 is generated. As such, the regenerative braking force FRB is controlled such that the wheel speed difference ΔVw is decreased. As a result, the value of the regenerative braking force FRB that satisfies the required braking force Freq is corrected to be decreased in consideration of the fact that the regenerative braking force FRB is in the slip state A.

Next, in step S114, the ECU 40 executes the supplementary process. With the supplementary process, the frictional braking device 26 is controlled such that the frictional braking force FFBr for supplementing the vehicle braking force F (that is, the difference between the required braking force Freq and the regenerative braking force FRB) that is insufficient with respect to the required braking force Freq is applied to the non-regenerative wheel 2r.

In more detail, in the example of the flowchart illustrated in FIG. 5, the supplementary process in step S114 is equivalent to the first supplementary process described above. With the first supplementary process, as illustrated in FIG. 6, at time T1 when the slip state A is detected and thereafter, the frictional braking force FFBr of the non-regenerative wheel 2r is generated by an amount corresponding to the decrease in the regenerative braking force FRB by the regenerative control process. After step S114, the process proceeds to RETURN

### Advantageous Effect

As described above, with the present embodiment, when the slip state A where the wheel speed Vw of regenerative wheel 2f executing the regenerative braking is below the slip determination threshold value THs is detected, the regenerative braking device 24 is controlled such that the regenerative braking force FRB that decreases the difference ΔVw between the slip determination threshold value THs and the wheel speed Vw of the regenerative wheel 2f is generated (the regenerative control process). The slip determination threshold value THs is positioned between the vehicle body speed V and the ABS operation threshold value THabs.

With the above-described regenerative control process, the wheel speed difference ΔVw (the slip state) is monitored in order to converge the wheel speed Vw of the regenerative wheel 2f to within a wheel speed range in which the ABS control is not operated. As such, when the braking is executed using only the regenerative braking force FRB in order to increase the power recovery amount, even in a case where, for example, the road surface state is changed and the slip of the regenerative wheel 2f is temporarily increased, the regenerative braking force FRB appropriate for converging the slip of the regenerative wheel 2f can be calculated. In more detail, the calculation can be continued without being interrupted by the operation of the ABS control. Then, the slip occurring in the regenerative wheel 2f can be converged by controlling the regenerative braking force FRB. Therefore, by executing the regenerative control process, it is possible to promote the use of a large regenerative braking force FRB while restricting the early operation of the ABS control.

Further, with the first supplementary process according to the present embodiment, during the execution of the regenerative control process, the braking force decreased in the regenerative wheel 2f can be supplemented using the frictional braking force FFBr of the non-regenerative wheel 2r. As such, when the regenerative braking force FRB is controlled for restricting the slip of the regenerative wheel 2f by the regenerative control process, it is possible to realize the required braking force Freq and restrict the decrease in the vehicle deceleration Gx.

### Replacing Process

During the braking in which the above-described regenerative control process is executed, the required deceleration Gxreq (the required braking force Freq) may be increased by an increase in the depression of the brake pedal 22 by the driver. In such a case, the following "replacing process" may be executed.

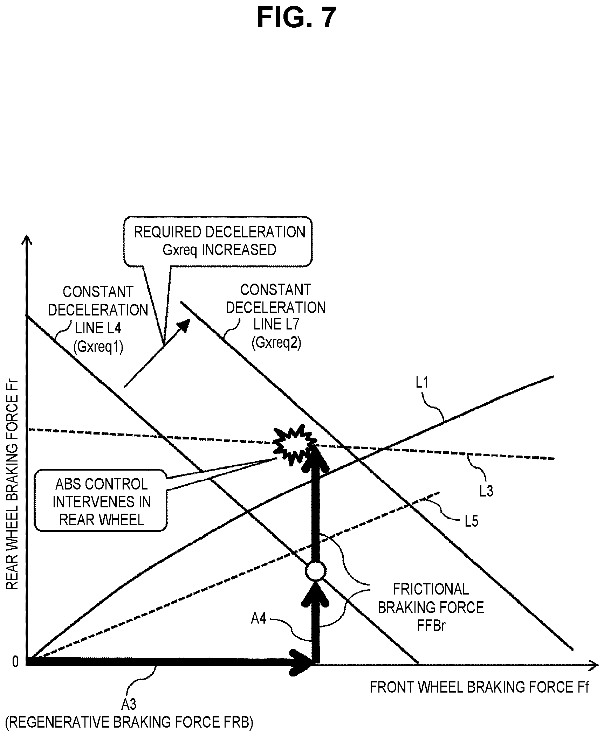

FIG. 7 is a graph for describing a shortcoming of the first supplementary process when the required braking force Freq is increased during the braking. Different from the above-described FIG. 4, FIG. 7 and FIG. 8 that is described below additionally show a required deceleration Gxreq2 (a constant deceleration line L7) after the increase in the depression together with a required deceleration Gxreq1 (the constant deceleration line L4) before the increase in the depression of the brake pedal 22.

During the execution of the regenerative control process, in order to restrict the slip of the regenerative wheel 2f, the braking force (the front wheel braking force Ff) of the regenerative wheel 2f cannot be increased. For this reason, the insufficient braking force caused by the increase in the required deceleration Gxreq is also supplemented by increasing the frictional braking force FFBr of the non-regenerative wheels 2r by the first supplementary process.

However, in the method of supplementing the insufficient braking force caused by the increase in the required deceleration Gxreq with the frictional braking force FFBr, the frictional braking force FFBr reaches the rear wheel locking limit line L3. As a result, as in the example of the required deceleration Gxreq2 illustrated in FIG. 7, the ABS control intervenes in the non-regenerative wheel (the rear wheel) 2r before the regenerative wheel (the front wheel) 2f. As such, when the ABS control intervenes, the deceleration Gx cannot be increased any further or the vehicle 1 may become unstable. Further, in the situation where the slip of the regenerative wheel 2f is restricted by the regenerative control process, when there is a probability that the non-regenerative wheel 2r may be locked caused by the increase in the required deceleration Gxreq as in the example illustrated in FIG. 7, it is highly likely that the ABS control may intervene not only in the non-regenerative wheel 2r but also in the regenerative wheel 2f. Then, when the ABS control intervenes in the regenerative wheel 2f in the state where the regenerative braking force FRB applied to the regenerative wheel 2f is increased, controllability of the ABS control may be decreased.

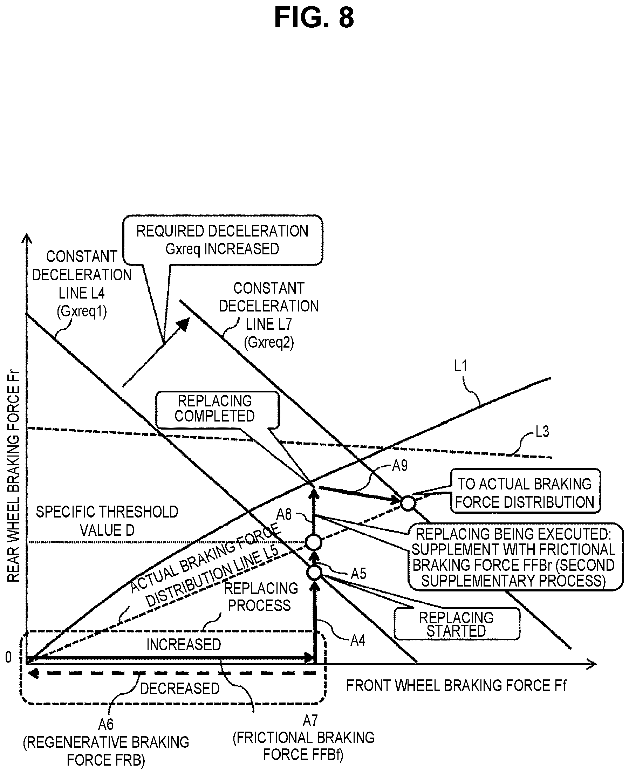

In consideration of the above-described additional shortcomings, the ECU 40 may execute the following "replacing process". The replacing process is executed to replace the regenerative braking force FRB generated by the regenerative control process with the frictional braking force FFBf of the same regenerative wheel 2f. FIG. 8 is a graph for describing an overview of the replacing process and processes regarding the replacing process according to the embodiment.

First, when the required deceleration Gxreq (the required braking force Freq) is increased during the braking in which the regenerative control process is being executed, the frictional braking force FFBr is increased as, for example, represented by the arrow A5, without the execution of the replacing process until the frictional braking force FFBr of the non-regenerative wheel 2r reaches the specific threshold value D by the first supplementary process. The specific threshold value D referred to here is equivalent to the value of the frictional braking force FFBr, which is obtained when the frictional braking force FFBr of the non-regenerative wheel 2r increased by the first supplementary process, reaches the actual braking force distribution line L5.

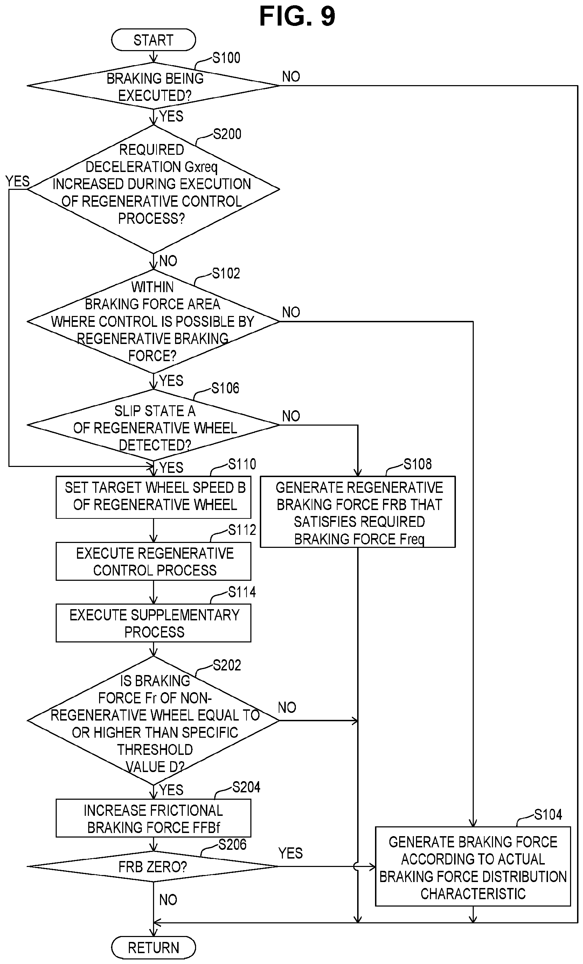

Then, as in an example illustrated in FIG. 8, when it is required to increase the frictional braking force FFBr of the non-regenerative wheel 2r, caused by the increase in the required deceleration Gxreq, to be higher than the specific threshold value D, the replacing process is started when the frictional braking force FFBr reaches the specific threshold value D. By the execution of the replacing process, the regenerative braking force FRB is decreased as represented by an arrow A6, and instead, the frictional braking force FFBf is increased as represented by an arrow A7. An example of a specific method of the replacing process will be described below together with step S204 of FIG. 9.

The replacing process is executed such that the braking force (the front wheel braking force) Ff of the regenerative wheel 2f is not substantially increased during the replacing. For this reason, during the execution of the replacing process, the frictional braking force FFBr of the non-regenerative wheel 2r is increased to satisfy the required braking force Freq (a second supplementary process), as represented by an arrow A8. In other words, the vehicle braking force F by the frictional braking force FFBr is continuously supplemented by the second supplementary process even during the execution of the replacing process.

The replacing process is completed when the regenerative braking force FRB becomes zero (that is, when the braking force Ff of the regenerative wheel 2f becomes only the frictional braking force FFBr). When the replacing process is completed, the frictional braking forces FFBf and FFBr of the regenerative wheel 2f and the non-regenerative wheel 2r are controlled such that the required deceleration Gxreq2 after the increase is satisfied on the actual braking force distribution line L5, as represented by an arrow A9.

FIG. 9 is a flowchart describing processes for the vehicle braking control that accompany the replacing process according to the embodiment. The processes of this flowchart are the same as that of the flowchart described in FIG. 5 except that processes of steps S200 to S206 are added to FIG. 9.

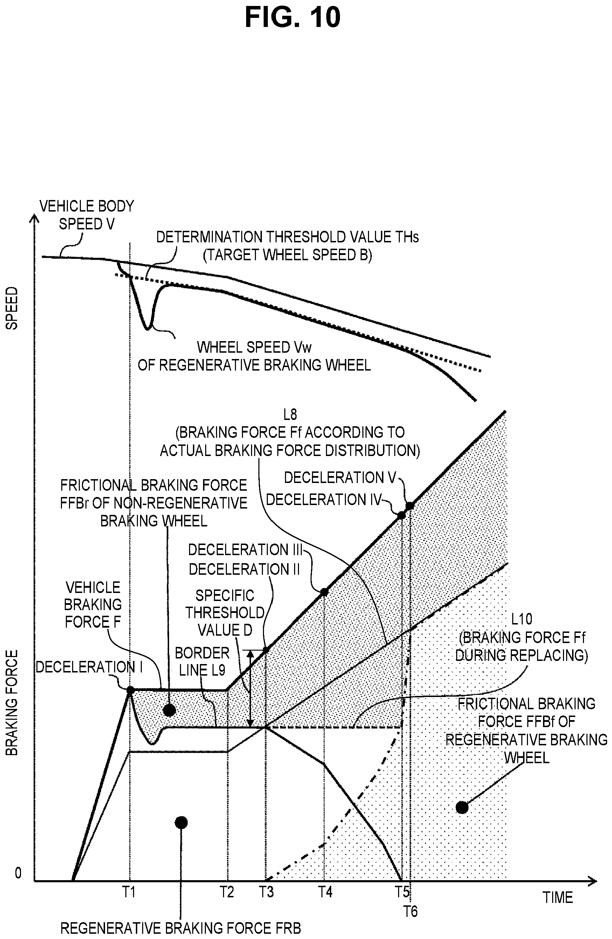

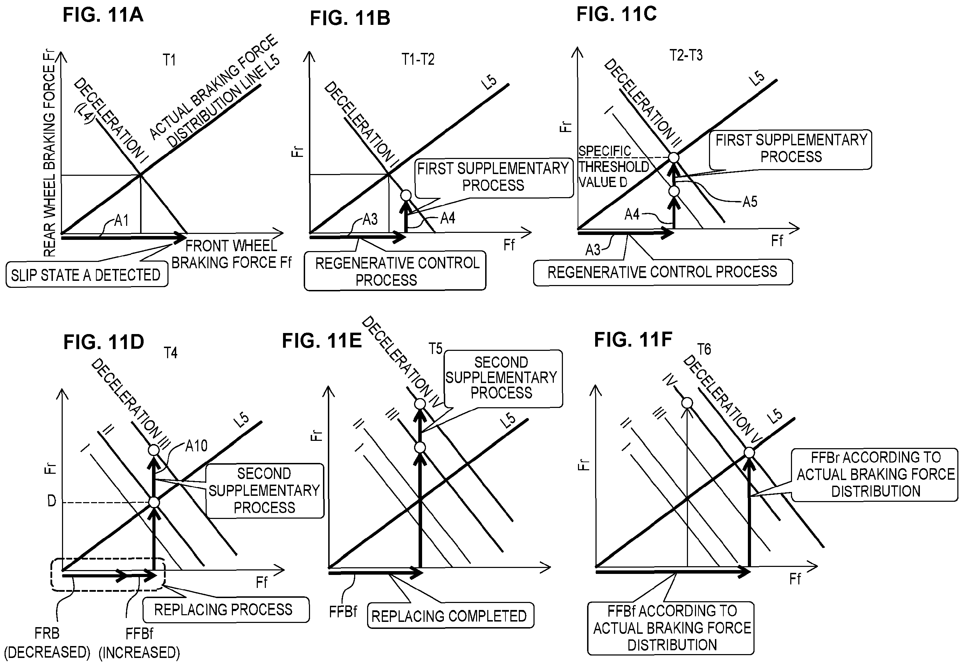

Here, to supplement the description of the processes described in FIG. 9, FIGS. 10 and 11A to 11F are referred to. FIGS. 10 and 11A to 11F are graphs for describing the operations regarding the vehicle braking control that accompanies the replacing process according to the embodiment. FIGS. 11A to 11F illustrate areas in which the frictional braking force FFBr is lower than the rear locking limit line L3 (see FIG. 8).

In FIG. 10, a deceleration I is equivalent to the required deceleration Gxreq at the start of the braking. When the slip state A is detected at time T1 as illustrated in FIGS. 10 and 11A, the regenerative control process and the first supplementary process are executed as illustrated in FIG. 11B. Then, in an example illustrated in FIG. 10, the required deceleration Gxreq larger than a deceleration V is required at time T2 during the execution of the regenerative control process.

In FIG. 9, in step S100, when the vehicle 1 is being braked, the process proceeds to step S200, and the ECU 40 determines whether the required deceleration Gxreq is increased during the execution of the regenerative control process. When the determination result is No, the process proceeds to step S102. On the other hand, when the determination result is Yes, processes of steps S110 to S114 are executed, and then the process proceeds to step S202. In the example illustrated in FIG. 10, at time T2, the determination result of step S200 is Yes. In a case where the replacing process is not completed when the deceleration Gx is being changed toward the increased required deceleration Gxreq, the determination result of step S200 is Yes.

In step S202, the ECU 40 determines whether the frictional braking force FFBr of the non-regenerative wheel 2r generated by the supplementary process (step S114) is equal to or higher than the specific threshold value D described above. The specific threshold value D can be calculated based on, for example, a current regenerative braking force FRB and a front-rear distribution ratio (the already-known value) of the braking force specified by the actual braking force distribution line L5 (see, for example FIG. 11C).

When the determination result of step S202 is No (FFBr < specific threshold value D), the process proceeds to RETURN. As a result, when the required deceleration Gxreq after the increase in the depression is maintained, the regenerative control process and the supplementary process (steps S112 and S114) are continued. For this reason, the frictional braking force FFBr is increased by the supplementary process (the first supplementary process) to satisfy the required braking force Freq while the regenerative braking force FRB is controlled by the regenerative control process. As a result, the vehicle braking force (a total braking force) F is also increased (see a period (T2 to T3) in FIG. 10, and FIG. 11C).

A deceleration II is equivalent to the value of the vehicle deceleration Gx corresponding to the vehicle braking force F at time T3 when the frictional braking force FFBr reaches the specific threshold value D. Additionally, a polygonal line L8 illustrated in FIG. 10 represents the braking force Ff of the regenerative wheel (the front wheel) 2f, which is obtained when the vehicle braking force F illustrated in FIG. 10 is distributed at the front-rear distribution ratio according to the actual braking force distribution line L5 (see, for example, FIG. 11C). Therefore, the polygonal line L8 intersects a border line L9 between the regenerative braking force FRB and the frictional braking force FFBf at time T3 when the frictional braking force FFBr reaches the specific threshold value D.

When the frictional braking force FFBr reaches the specific threshold value D, the determination result of step S202 is Yes and the process proceeds to step S204. In step S204, the ECU 40 increases the frictional braking force FFBf of the regenerative wheel 2f by, for example, a predetermined amount. The frictional braking force FFBf is increased to replace the regenerative braking force FRB controlled by the regenerative control process with the frictional braking force FFBf. In other words, the above-described "replacing process" is realized by combining the process of step S204 (the increase in the frictional braking force FFBf) and the regenerative control process.

Specifically, applying the frictional braking force FFBf to the regenerative wheel 2f in which the regenerative braking force FRB is controlled by the regenerative control process means that the regenerative wheel 2f tends to slip. In other words, when the frictional braking force FFBf is applied as above, the regenerative braking force FRB is decreased by an action of the regenerative control process in which the wheel speed Vw of the regenerative wheel 2f is converged to the target wheel speed B. As a result, the braking force Ff of the regenerative wheel 2f, which is a sum of the regenerative braking force FRB and the frictional braking force FFBf, is generally constant as shown by a straight line L10 in FIG. 10.

In step S206 following step S204, the ECU 40 determines whether the regenerative braking force FRB is zero. When the replacing process has not been completed, the determination result of step S206 is No, and the process proceeds to RETURN As a result, when the required deceleration Gxreq after the increase in the depression is maintained, the processes of steps S110 to S114 and steps S202 and S204 are continued. Therefore, while the determination result of step S206 is No, the replacing process is continued.

Further, during the continuation of the replacing process, the supplementary process (step S114) functions as the above-described second supplementary process. Specifically, FIG. 11D shows an operation at time T4 when the vehicle braking force F corresponding to a deceleration III, which is obtained in the middle of the replacing process, is obtained. In the middle of the replacing process, the braking force Ff of the regenerative wheel 2f is not increased as represented by a straight line L10 (FIG. 10) and an arrow A10 in FIG. 11D. For this reason, the supplementary process of step S114 functions as the second supplementary process and the insufficient braking force F with respect to the required braking force Freq is supplemented with the frictional braking force FFBr. As such, in the example of the flowchart illustrated in FIG. 9, the supplementary process in step S114 is equivalent to each of the first and the second supplementary processes.

Time T5 in FIG. 10 is equivalent to the completion of the replacing process. As illustrated in FIG. 11E, at time T5, the vehicle braking force F corresponding to a deceleration IV is obtained. When the replacing process is completed (that is, when the regenerative braking force FRB becomes zero), the determination result of step S206 is Yes. Further, together with the completion of the replacing process, the regenerative control process is also ended.

When the determination result of step S206 is Yes, the process proceeds to step S104. As a result, the ECU 40 controls the frictional braking device 26 such that the frictional braking forces FFBf and FFBr are generated according to the actual braking force distribution line L5. Thereafter, the process proceeds to RETURN. As illustrated in FIGS. 10 and 11F, time T6 is equivalent to a time when the frictional braking forces FFBf and FFBr according to the actual braking force distribution line L5 are obtained by the control of the frictional braking device 26 after time T5. At time T6, the vehicle braking force F corresponding to the deceleration V is obtained.

After the replacing process is ended at time T5, the restriction of the slip of the regenerative wheel 2f by the regenerative control process is ended and the frictional braking force FFBf of the regenerative wheel 2f is increased as illustrated in FIG. 10. FIG. 10 shows a state where the wheel speed Vw of the regenerative wheel 2f is decreased caused by such an increase in the frictional braking force FFBf. Further, thereafter, when the wheel speed Vw is below the ABS operation threshold value THabs (see FIG. 3), the ABS control is operated. Even when the ABS control is operated as above, since the replacing process is completed in advance, loss of the vehicle deceleration Gx caused by executing the replacing process in a short period at the time of operating the ABS does not occur.

### Advantageous Effect

As described above, with the processes of the flowchart illustrated in FIG. 9, when the required deceleration Gxreq (the required braking force Freq) is increased during the execution of the regenerative control process and the frictional braking force FFBr of the non-regenerative wheel 2r reaches the specific threshold value D, the replacing process is executed. In other words, in preparation for the ABS control that may intervene later, in response to the frictional braking force FFBr that is increased as the required deceleration Gxreq is increased, the replacing process is started before the condition for operating the ABS control is satisfied. As such, it is possible to restrict the operation of the ABS control in a state where the regenerative braking force FRB is large. In more detail, when it is required to increase the braking force Ff of the regenerative wheel (the front wheel) 2f in order to restrict the locking of the non-regenerative wheel (the rear wheel) 2r, by the replacing process, the locking of the non-regenerative wheel 2r can be restricted while preparing for the ABS control. For this reason, it is possible to satisfy the required deceleration Gxreq using the second supplementary process while restricting the vehicle 1 from becoming unstable. Further, even when the ABS control is operated, the regenerative braking force FRB is lowered in advance by the replacing process, and thus it is possible to restrict the controllability of the ABS control from being decreased.

Further, the "specific threshold value" according to the present disclosure for deciding the start timing of the replacing process is not necessarily limited to the specific threshold value D, and may be another value. Additionally, by using the specific threshold value D, it is possible to appropriately decide the start timing of the replacing process using a timing when the front-rear distribution ratio of the vehicle braking force F is closer to the non-regenerative wheel (the rear wheel) 2r with respect to the actual braking force distribution characteristic.

Further, the replacing process is executed using a method (for convenience, here, it is referred to as a "method M1") in which a combination of the increase (generation) of the frictional braking force FFBf and the regenerative control process for deciding the regenerative braking force FRB from the wheel speed difference ΔVw is used. Regarding this point, the replacing process in response to the reaching of the frictional braking force FFBr to the specific threshold value, such as the specific threshold value D, is not necessarily limited to the above method, and may be executed using, for example, a method M2 in which the frictional braking force FFBf is increased while the regenerative braking force FRB is decreased at a constant changing rate. However, for example, when the changing rate used in the above method M2 is low, since the road surface situation can always change, the slip of the regenerative wheel 2f may progress during the replacing and the ABS control may be operated or the vehicle stability may be decreased. On the other hand, when the changing rate is high, the vehicle deceleration Gx may be changed and a shock may occur in the vehicle 1. In contrast, with the method M1 according to the present embodiment, the regenerative braking force FRB and the frictional braking force FFBf are cooperatively controlled while the slip of the regenerative wheel 2f is monitored. For this reason, the replacing process is executed while restricting an adverse effect, such as the operation of the ABS control caused by the progress of the slip of the regenerative wheel 2f.

### Modified Examples

In the above-described embodiment, when the required braking force Freq corresponding to the required deceleration Gxreq is within the braking force area in which the required braking force Freq can be controlled using only the regenerative braking force FRB, the regenerative braking device 24 is controlled such that only the regenerative braking force FRB that satisfies the required braking force Freq is generated (see step S108). As such, the power recovery amount can be effectively increased. However, the braking force Ff of the regenerative wheel 2f, which is generated when the required braking force Freq is within the braking force area, is not necessarily limited only to the regenerative braking force FRB, and may be a combination of the regenerative braking force FRB and the frictional braking force FFBf.

Further, in the above-described embodiment, various processes (that is, the "regenerative control process", the "first supplementary process", the "replacing process", and the "second supplementary process") for the vehicle braking control according to the present disclosure is applied to the vehicle 1 having the front wheels 2f as the "regenerative braking wheels" and the rear wheels 2r as the "non-regenerative braking wheels". However, the various processes according to the present disclosure can also be similarly applied to a vehicle having rear wheels as the "regenerative braking wheels" and front wheels as the "non-regenerative braking wheels".

## Claims

1. A vehicle (1) comprising:
a regenerative braking device (24) provided on regenerative braking wheels of the vehicle (1), the regenerative braking wheels being any ones of front wheels (2f) and rear wheels (2r) of the vehicle (1);
a frictional braking device (26) configured to separately control a frictional braking force (FFB) applied to each of the front wheels (2f) and the rear wheels (2r); and
an electronic control unit (40) configured to, upon detecting a slip state where a wheel speed (Vw) of the regenerative braking wheels executing regenerative braking is below a slip determination threshold value (THs) positioned between a vehicle body speed (V) of the vehicle (1) and an anti-lock brake control operation threshold value, execute a regenerative control process for controlling the regenerative braking device (24) such that the regenerative braking device (24) generates a regenerative braking force (FRB) that decreases a difference between the wheel speed (Vw) of the regenerative braking wheels and the slip determination threshold value (THs).

2. The vehicle (1) according to claim 1, wherein the electronic control unit (40) is configured to execute a first supplementary process for generating the frictional braking force of non-regenerative braking wheels, which are the other ones of the front wheels (2f) and the rear wheels (2r), such that a required vehicle braking force (Freq) is satisfied during the execution of the regenerative control process.

3. The vehicle (1) according to claim 2, wherein the electronic control unit (40) is configured to, when the required vehicle braking force (Freq) is increased during braking in which the regenerative control process is executed, execute a replacing process for replacing the regenerative braking force (FRB) controlled by the regenerative control process with the frictional braking force of the regenerative braking wheels after the frictional braking force of the non-regenerative braking wheels controlled by the first supplementary process reaches a specific threshold value (D).

4. The vehicle (1) according to claim 3, wherein the electronic control unit (40) is configured to, in the replacing process, increase the frictional braking force of the regenerative braking wheels while continuing the regenerative control process.

5. The vehicle (1) according to claims 3 or 4, wherein:
the frictional braking device (26) includes a front wheel cylinder and a rear wheel cylinder; and
the specific threshold value (D) is equivalent to a value of the frictional braking force of the non-regenerative braking wheels obtained when the frictional braking force of the non-regenerative braking wheels that is increased by the first supplementary process reaches an actual braking force distribution line (L5) that is obtained when brake fluids having the same hydraulic pressure are supplied to the front wheel cylinder and the rear wheel cylinder.

6. The vehicle (1) according to any one of claims 3 to 5, wherein the electronic control unit (40) is configured to execute a second supplementary process for increasing the frictional braking force of the non-regenerative braking wheels such that the required vehicle braking force (Freq) is satisfied during the execution of the replacing process.

7. A vehicle control method of controlling a vehicle (1) including a regenerative braking device (24) and a frictional braking device (26), the regenerative braking device (24) being provided on regenerative braking wheels, which are any ones of front wheels (2f) and rear wheels (2r) of the vehicle (1), and the frictional braking device (26) being configured to separately control a frictional braking force (FFB) applied to each of the front wheels (2f) and the rear wheels (2r), the vehicle control method comprising:
executing, upon detecting a slip state where a wheel speed (Vw) of the regenerative braking wheels executing regenerative braking is below a slip determination threshold value (THs) positioned between a vehicle body speed (V) of the vehicle (1) and an anti-lock brake control operation threshold value, a regenerative control process for controlling the regenerative braking device (24) such that the regenerative braking device (24) generates regenerative braking force (FRB) that decreases a difference between the wheel speed (Vw) of the regenerative braking wheels and the slip determination threshold value (THs).
